# EUROPEAN PATENT APPLICATION

(11) **EP 3 305 745 A1**
(43) Date of publication of application: **11.04.2018**
(21) Application number: 16192346.1
(22) Date of filing: 05.10.2016
(51) Int. Cl.: C04B 41/87, C04B 41/45, C04B 41/50, C23C 14/08, B22C 9/08

(54) **COATED FILTERS AND METHODS OF PRODUCTION**

(71) Applicant: FOSECO INTERNATIONAL LIMITED, Central Park Barlborough Links Derbyshire S43 4XA (GB)
(72) Inventor: ANEZIRIS, Christos, 09599 Freiberg (DE); GEHRE, Patrick, 09599 Freiberg (DE); CHILD, Nicholas, West Midlands B76 1PZ (GB); DEBASTIANI, Duane, Pennsilvaniy 15108 (US)
(74) Representative: Bailey, Jennifer Ann

(57) **Abstract**

Provided is a carbon-bonded filter having a coating comprising gamma alumina, and a method for producing the filter. The method comprises thermally spraying a precursor coating material comprising alpha alumina, at a temperature which is sufficiency high to at least partially convert the alpha alumina to gamma alumina, to a carbon-bonded reticulated filter, so as to produce a carbon-bonded filter having a coating comprising gamma alumina.

## Description

The present invention relates to a method for producing a coated filter suitable for filtering molten metal, and filters made by such a method. More particularly, the invention relates to a method for producing a filter having a coating comprising gamma alumina.

Molten metals usually contain solids such as oxides of the metal and other impurities which may cause the final cast product to have undesirable characteristics. Filters have been devised to remove these impurities from the molten metal during the casting process. Normally these filters are made of refractory materials to withstand the high temperatures associated with molten metals.

A type of filter for filtering molten metal, which has been extensively employed in the art, comprises an open-cell porous structure comprising refractory particles bound together by an inorganic matrix. Filters of this type can be made, for example, by coating a suitable open-celled foam, e.g., reticulated polyurethane foam, with a composition comprising a slurry of refractory particles (e.g. zirconia), a binder (e.g. a borosilicate glass) and water, drying the coated foam and then firing to produce an open-celled porous filter comprising the refractory particles bound together by a glass matrix. The polyurethane foam generally chars and burns away during the firing process and does not contribute significantly to the properties of the produced filter. Filters of this type are disclosed, for example, in EP-A-0412673 and EP-A-0649334 both in the name of Foseco International Ltd.

Such refractory filters have a foam-like appearance and are referred to in the metal filtration industry as foam filters. A foam filter has a network of strands which define a plurality of interconnected open cells. Since the flow-path through such a filter is tortuous, the filtration efficiency is much higher than that of cellular filters.

Foam filters are usually ceramic foam filters but more recently carbon-bonded filters, where the refractory material is bonded by a material comprising a carbon matrix, have become established for certain applications. Carbon-bonded filters may be prepared by coating a disposable foam template with a slurry comprising particles of a refractory material and a carbon-rich binder, drying the coated template and firing.

It is known to apply coatings to the molten metal-contacting surfaces of refractory filters. Such coatings may provide a chemically active surface which increases the ability of the filter to remove inclusions from the metal. Commonly used active coatings include alumina (aluminium oxide, Al₂O₃), spinel, silicates (including silica and mullite), zirconia (ZrO₂), and oxides of magnesium and beryllium. Alumina is particularly useful as a coating material since it is chemically resistant to many elements at high temperatures.

Several different phases of alumina can be prepared. The most stable form is α-alumina (corundum), which is characterized by high crystallinity and octahedral coordination of aluminium. Other forms include γ-, δ-, κ- and θ-alumina. Of these, γ-alumina (which is described as "metastable") is frequently used in catalysis and adsorption due to its high surface area and porosity, good thermal stability up to 700 °C and useful acid-base surface properties. γ-alumina also has a small plate-like structure which small cracks, which gives better thermal shock performance compared to α-alumina.

GB2034298B discloses a ceramic foam filter coated with an activated alumina layer. The filter was formed by, first, impregnating a polyurethane foam substrate with a ceramic slurry, drying the slurry and repeating to achieve the desired density. The slurry-coated foam was then fired. Then, the ceramic foam was impregnated with an alumina slurry, dried and fired to obtain a ceramic porous body covered with an activated alumina layer.

It has been found that following application of a coating material comprising alpha alumina to a carbon bonded filter under ambient conditions, the coated filter must be fired under a reduced atmosphere at high temperature in order to achieve good adhesion of the coating (Emmel et al., Functionalization of carbon-bonded alumina filters through the application of active oxide coatings for steel melt filtration', J. Mater. Res., Vol. 28, No. 17, Sep 14, 2013). A sintering (i.e. firing) temperature of 1400 °C was shown to result in the generation of tight and microcrack-free alumina coatings due to a pronounced shrinkage of the coating material onto the filter struts. The shrinkage produces compresses stresses that counteract the peak stresses of the hollow filter struts, resulting in higher Cold Crush Strength (CCS). It was also found that the filter substrates had to be thermally pretreated at 800 °C in order to achieve stable coated filters, whereas the sintering of non-pretreated filters generated macrocracks.

Gamma alumina transforms to alpha alumina above 1100 °C. The application of a coating material comprising gamma alumina to a filter substrate, followed by sintering at 1400 °C, would therefore result in a coating of alpha alumina.

It is an object of the present invention to provide improved methods of producing coated filters for filtering molten metal.

According to a first aspect of the invention there is provided a method of producing a coated filter for filtering molten metal, the method comprising thermally spraying a precursor coating material comprising alpha alumina, at a temperature which is sufficiency high to at least partially convert the alpha alumina to gamma alumina, to a carbon-bonded reticulated filter, so as to produce a carbon-bonded filter having a coating comprising gamma alumina.

Thermal spraying is a coating technique in which precursor coating materials (also known as "feedstock"), in powder or wire form, are heated by electrical or chemical means and sprayed onto a substrate in a molten or semi-molten state. Molten droplets of metals, ceramics, glasses and/or polymers can be sprayed onto a surface using thermal spraying. Types of thermal spraying include plasma spraying, detonation spraying, wire arc spraying, flame spraying, high velocity oxy-fuel coating spraying (HVOF), warm spraying and cold spraying. In some embodiments, the thermal spraying is plasma spraying or flame spraying.

It has been found that a carbon bonded filter having a coating comprising gamma alumina can be prepared by applying a precursor coating material comprising alpha alumina using thermal spraying. The thermal spraying process melts the alpha alumina, causing it to transform to gamma alumina. On contact with the filter substrate the alumina cools rapidly such that the gamma alumina form is retained in the coating. This technique creates a plate-like microstructure with small cracks that gives better thermal shock performance in comparison to alpha alumina. It will be appreciated that, in use, if the filter exposed to molten metal having a temperature higher than 1100 °C (such as molten iron or steel), the gamma alumina will be transformed to the alpha phase; however, the gamma phase will exist for a period of time of the order of microseconds to milliseconds.

Surprisingly, it has been found that the coating comprising gamma alumina which is achieved by thermal spraying adheres well to the carbon bonded filter substrate such that an additional firing or sintering step is not required. By avoiding the need for a further sintering step at a temperature which would result in the conversion of the gamma alumina back to alpha alumina, the gamma alumina present in the coating can be retained. The present invention thus enables the production of carbon bonded filters having a well-adhered coating comprising gamma alumina.

Thus, in some embodiments the method does not include a step of sintering (i.e. firing) the coated filter.

A carbon bonded filter having a coating comprising gamma alumina is particularly beneficial for the filtration of molten metal because it is able to withstand higher temperatures, resist thermal shock and has lower residual stresses compared to non-coated carbon bonded filters, or carbon-bonded filters with alpha alumina coatings. The lower porosity of the coated filter improves inclusion removal, since there is less or no interaction between the melt and the carbon-bonded substrate. In the case of alpha alumina coatings which are obtained using a cold coating process, sub-oxides formed in situ are transferred at the interface filter/steel and generate a reactive clogging; this can be beneficial for some applications, but there is the risk, that the melt gets impurities of the filter. In case of the gamma coating with closed porosity the filter is really working as an active coating catching mainly the alumina inclusions from the melt. The thermal spray technique also conveniently enables larger filters to be coated in a short period of time.

The carbon bonded filter (also referred to herein as the "filter substrate") may be formed using the methods described in WO2002018075. The filter is formed from a slurry comprising particles of a refractory material and a carbon-rich binder. The refractory material can be, for example, any of the well-known refractory materials in the art which provide resistance to the corrosive effect and high temperature of the molten metal which it is desired to filter. Examples of suitable refractory materials include zirconia, zircon, silica, alumina, titania, carbides (e.g. silicon carbide, zirconium carbide, titanium carbide, calcium carbide, aluminium carbide), nitrides (e.g. silicon nitride and aluminium nitride), metal oxides (e.g. nickel oxide and chromic oxide), magnesia, mullite, graphite, anthracite, coke, active carbon, graphite-refractory (e.g. graphite-magnesia, graphite-alumina, graphite-zirconia), or mixtures comprising two or more of these.

The bonding material comprises a carbon matrix which bonds the refractory particles together and in which the particles are embedded in the filter. The bonding material is preferably in the form of a coke or semicoke which is produced by the thermal decomposition of an organic material.

The relative proportions of particulate refractory material to bonding material in the carbon-bonded filter may be in the range of: at least 50% refractory : no more than 50% bonding material; at least 55% refractory : no more than 45% bonding material; or at least 60% refractory : no more than 40% bonding material, for example approximately 65-75% refractory : approximately 35-25% bonding material.

A method for making a carbon bonded filter suitable for filtering molten metal may comprise:
(1.) forming a slurry comprising (a) particles of a refractory material, (b) a binder and (c) a liquid carrier,
(2.) coating a disposable former with the slurry
(3.) drying the coated former,
(4.) optionally applying one or more additional coats of a refractory material and/or a binder, optionally with liquid carrier, and drying the one or more additional coats,
(5.) firing the coated former to produce a porous material,
wherein the binder is a carbon-rich source selected from one or more of the following classes of materials: pitches, tars, and organic polymers that degrade to form carbon on pyrolysis. The carbon-rich source is selected from one of more classes of material which comprise pitches, tars and polymers that degrade to form carbon on pyrolysis. Examples of such materials are coal tar, petroleum pitch, asphalt, bitumen, synthetic pitch, synthetic tar, synthetic bitumen; or residues derived from the pyrolysis of coal, crude oil, coal tar, petroleum pitch, asphalt, bitumen, synthetic pitch, synthetic tar or synthetic bitumen. The polymers which are degradable to form carbon on pyrolysis are preferably aromatic organic polymers.

A "precursor coating material", as used herein, refers to the material which forms the coating, prior to its application to the filter substrate by the thermal spraying process. It will be appreciated that the precursor coating material is distinguished from the coating which is obtained by the thermal spraying process (also referred to as the "final coating material") by the phase composition of the alumina present in the material. Specifically, the precursor coating material will have a lower content of gamma alumina, and a higher content of alpha alumina, compared to the final coating material.

In some embodiments the precursor coating material comprises at least 50, at least 60, at least 70, at least 80, at least 90, at least 95, at least 98, at least 99 wt% alumina. In some embodiments the precursor coating material is 100 wt% alumina.

In some embodiments, the precursor coating material additionally comprises aluminium hydroxide, and/or any other suitable alumina-generating compound that will be known to those skilled in the art.

In some embodiments the precursor coating material comprises at least 50, at least 60, at least 70, at least 75, at least 80, at least 85 or at least 90 wt% alpha alumina. In some embodiments, the precursor coating material comprises no more than 98, no more than 95, no more than 90, no more than 85, no more than 80, no more than 75, no more than 70 or no more than 60 wt% alpha alumina. In some embodiments the precursor coating material is 100 wt% alpha alumina.

The precursor coating material may be in the form of a powder, wire, rod or cord.

In some embodiments, the method further comprises the step of preparing a precursor coating material comprising alpha alumina. Preparing the precursor coating material may comprise mixing the alpha alumina with one or more suitable carriers, solvents, binders or additives. Additives may be selected from plasticizers (e.g. ligninsulfonate), dispersants (e.g. polyelectrolyte dispersants), polymers (e.g. polypropylene glycol), anti-foaming agents or binders (e.g. binders based on PVA or methyl cellulose).

The precursor coating material may have a melting temperature of at least 1500, at least 1800, at least 2000 or at least 2200 °C. It has been found that the melting temperature of the precursor coating material influences the depth to which the coating penetrates the filter substrate when it is applied by thermal spraying. The lower the melting temperature the higher is the amount of coating detected in the interior of the filter substrate, and the higher is the coverage on the backside of the struts of the reticulated structure.

In some embodiments, the method further comprises forming a rod of precursor coating material. The step of forming the rod may comprise:
mixing together alpha-alumina, a binder and optionally one or more additives to form a mixture;
extruding the mixture into the shape of a rod;
partially de-binding the extruded mixture; and
sintering the partially de-binded extruded mixture to provide a rod of precursor coating material.

The alpha alumina used for forming the rod may be in powder form. The powder may have an average (i.e. mean) particle size of from 1 to 20 μm. The alpha alumina may be calcined.

The binder may be a thermoplastic injection moulding binder. Suitable binders include SILIPLAST HO (Zschimmer & Schwartz, Koblenz, Germany), which is an injection moulding binder specifically designed for use with oxide ceramic raw materials. The binder may be present in the mixture in an amount of no more 25 wt%, no more than 22 wt% or no more than 20 wt%. The binder may be present in the mixture in an amount of at least 10 wt%, at least 12 wt% or at least 15wt%. For example, the mixture may contain approximately 18 wt% binder.

The mixture may be extruded in a screw extruder. A suitable extruder is a heatable twin screw extruder, as sold by BRABENDER (Duisberg, Germany).

The step of partially de-binding the extruded mixture may be carried out using a suitable solvent. The skilled person will be able to select a solvent which is appropriate for the binder system used. In some embodiments, the solvent is water. The solvent may have a temperature of from 30 to 100 °C, from 40 to 80 °C or from 50 to 70 °C. De-binding the extruded mixture enables sintering to be carried out without causing micro-cracking of the rod. This is because up to about 65% of the binder can be dissolved by treatment with a solvent, such as warm water, such that less binder is then lost during sintering, leading to straighter and smoother rods.

Sintering may be carried out at a temperature of from 1100 to 1500 °C, e.g. approximately 1450 °C. Sintering may be carried out for a period of from 30 minutes to 4 hours, or from approximately 1 to 2 hours. The sintering process provides the rod with sufficient mechanical strength for handling during the thermal spraying process.

The rod may then be cooled prior to carrying out the thermal spray process.

Once the precursor coating material has been prepared, it can be applied to the filter substrate by thermal spraying. In some embodiments, the precursor coating material is applied using flame spraying. Flame spraying is a type of thermal spraying which utilizes combustible gases to create the energy required to melt the precursor coating material. Common combustible gases commonly used in flame spraying include oxygen, hydrogen, acetylene, propane, natural gas and combinations thereof.

The temperature of the thermal spraying process must be sufficient to melt the precursor coating material so that it can be applied to the filter substrate in molten or semi-molten form. The temperature must also be sufficient to at least partially convert the alpha alumina present in the precursor coating material to gamma alumina. The temperature profile of the melt must also be sufficient for the conversion of alpha alumina to gamma, and for the rapid cooling of the alumina on contact with the filter substrate so as to retain the gamma alumina phase on freezing. It will be appreciated that the temperature of thermal spraying will depend on the composition of the precursor coating material, specifically the proportion of alpha alumina, and the type and proportions of other components.

In some embodiments, all of the alpha alumina present in the precursor coating material is converted to gamma alumina by the thermal spraying process. In the flame spraying process, the temperature is that which is generated by combustion of the combustible gases. The temperature generated is influenced by the type of gas and the gas flow rate. The combustible gas or combination of gases can therefore be selected by the skilled person in accordance with the desired temperature. A temperature of above 1100 °C leads to the conversion of alpha alumina to gamma alumina. Thus, in some embodiments the precursor coating material is applied by thermal spraying at a temperature of at least 2800, at least 3000 or at least 3100 °C. A temperature exceeding the melting temperature of the alumina is beneficial due to thermal losses.

Flame spraying can be carried out using a flame spraying gun. A range of flame spraying guns are widely available and are tailored to specific applications. An example of a flame spraying gun that uses a precursor coating material in the form of a rod, and which is suitable for use in the present invention, is the Master Jet gun, sold by Saint-Gobain Coating Solutions.

As will be appreciated by those skilled in the art, the combustion temperature of the flame spraying process will depend on the combustible gas or gases and, if a mixture of gases is used, their relative ratios.

In some embodiments, the combustible gases are oxygen and acetylene. This combination of gases enables a combustion temperature of up to 3160 °C to be reached.

In some embodiments the flow rate of the oxygen gas is from 0.8 to 4.0 or from 1.0 to 3.0 or from 2.0 to 2.5 m³/hour. In some embodiments the oxygen pressure is from 4.0 to 8.0, from 4.5 to 7.0 or from 5.0 to 6.0 bar. In some embodiments the oxygen pressure is approximately 5.5 or 5.6 bar.

In some embodiments the flow rate of the acetylene gas is from 0.3 to 1.0, from 0.33 to 0.95 or from 0.5 to 0.9 m³/hour. In some embodiments the acetylene pressure is from 0.8 to 2.0, from 0.9 to 1.5, from 1.0 to 1.4 or from 1.1 to 1.2 bar.

In some embodiments, the gas flow rates are adjusted to achieve a ratio of the acetylene flow rate to the oxygen flow rate of from 1:1 to 0.3:1, or from 0.7:1 to 0.5:1.

In some embodiments, the high of acetylene (as measured by ball height in a flowmeter) is from 50 to 70 mm, e.g. 60 mm.

In some embodiments, the high of oxygen (as measured by ball height in a flowmeter) is from 40 to 60 mm, e.g. 50 mm.

In some embodiments, the flow rate of the air is from 25 to 50, from 30 to 45 or from 35 to 40 m³/hour, e.g. approximately 38 m³/hour. In some embodiments the air pressure is from 1 to 10, from 2 to 8, from 3 to 7 bar, or from 5 to 6 bar, e.g. 5.5 bar. The air functions as a carrier and transports the molten droplets towards the substrate, and also cools the nozzle of the spray gun.

In embodiments wherein the precursor coating material is in the form of a rod or wire, the feed rate of the rod or wire through the flame spraying gun must be selected. If the feed rate is too low, there is a risk that the rod jams in the feeding tube and delivery of the rod stops. If the feed rate is too high, there is a risk that the reaction time is too short for melting the whole wire or rod such that splitting of the wire or rod occurs. The feed rate must therefore be optimized to achieve a regular coating in a short time. In some embodiments, the feed rate is from 35 to 120, from 40 to 100 or from 50 to 70 mm/min.

Another important parameter is the gun-to-substrate distance, more specifically the distance between an end of the nozzle of the gun and a surface of the filter substrate which is to be coated. If the distance is too small then the coating and the substrate will be detrimentally affected by the pressurized air. If the distance is too large then a smaller amount of coating material reaches the substrate, and thus the time taken to apply the coating is increased. In some embodiments, the distance between the nozzle of the gun and the filter is from 80 to 150 mm, from 90 to 130 mm or from 100 to 120 mm.

It will be appreciated that the filter substrate has at least one first surface for forming a side face of the filter and two opposed second surfaces for forming the through-flow faces of the filter. The shape of the filter substrate will generally depend on the intended application of the resulting filter. Commonly, the filter will have a circular, square or rectangular cross section. A filter substrate having a circular cross section will have just one first surface whereas a filter substrate having a square or rectangular cross section will have four first surfaces. In some embodiments, the precursor coating material is applied to at least the two through-flow faces of the filter substrate. In some embodiments, the precursor coating material is applied to each surface of the filter (i.e. both second surfaces and the or each first surface).

The precursor coating material may be applied to each surface of the filter for a period of time sufficient to achieve the desired coating thickness, the desired depth of penetration into the filter substrate, the desired filter weight or the desired coating or the filter density. In some embodiments, the precursor coating material is applied to each surface of the filter for a period of time sufficient to ensure that the coating is applied throughout the thickness of the filter. For example, the spray may be directed to the surface of the filter for approximately 1 second per 1-5 cm².

In some embodiments, the coating is applied such that it penetrates the filter surface to a depth of at least 0.3 cm, at least 0.5 cm, at least 1 cm or at least 1.5 cm. In some embodiments, the coating is applied such that it penetrates the filter surface to a depth of at least 1, at least 2, at least 3, at least 4 or at least 5 pores. In some embodiments, the coating is applied such that it penetrates the filter surface to a maximum depth of 6 pores.

In some embodiments, the coating is applied so as to achieve an increase in the weight of the filter substrate by no more than 30%, no more than 20%, no more than 15% or no more than 10%.

During the thermal spraying process, the precursor coating material (e.g. in rod form) enters a flame at a temperature which is sufficient to melt the precursor coating material and transform the alpha alumina to gamma alumina. Tiny droplets of the molten material are sprayed onto the filter substrate, coating the strands of the reticulated carbon bonded filter. Upon contact with the filter substrate the coating material cools rapidly, causing the metastable gamma phase to be retained. The higher the cooling rate, the higher is the proportion of gamma-alumina in the final coating material. During the thermal spraying process, the filter substrate may be at ambient temperature (i.e. the temperature of the surrounding environment, which may be from 15-25 ° C or from 18-22 ° C), or below ambient temperature. In some embodiments, the filter is precooled prior to coating. Alternatively, it may be preferred not to thermally treat the filter during or prior to coating.

According to a second aspect of the invention, there is provided a carbon-bonded filter having a coating comprising gamma alumina.

The proportion of gamma-alumina may be at least 50%, at least 60, at least 70, at least 80%, at least 90% or at least 95% of the alumina content of the coating.

In some embodiments, the coating has a thickness of from 30 to 500 μm, from 40 to 300 μm, from 50 to 200 μm, from 60 to 150 μm or from 80 to 120 μm, e.g. about 50 μm or about 100 μm.

In some embodiments, the open porosity of the coated filter is no greater than 15 vol%, no greater than 12 vol%, no greater than 10 vol% or no greater than 8 vol%.

It will be understood that statements made herein in relation to the first aspect of the invention may equally apply to the second aspect of the invention, and vice versa, unless otherwise indicated.

Embodiments of the invention will now be described by way of example and with reference to the accompanying figures in which:
Figure 1 is a plot showing the result of XRD (X-ray diffraction) analysis of a filter coating applied by flame spraying a coating precursor material comprising alpha alumina;
Figure 2 shows light microscopy images of a carbon bonded filter (a) before application of a coating and (b) after application of a coating comprising gamma alumina in accordance with an embodiment of the present invention.

### Example 1

### Filter substrate

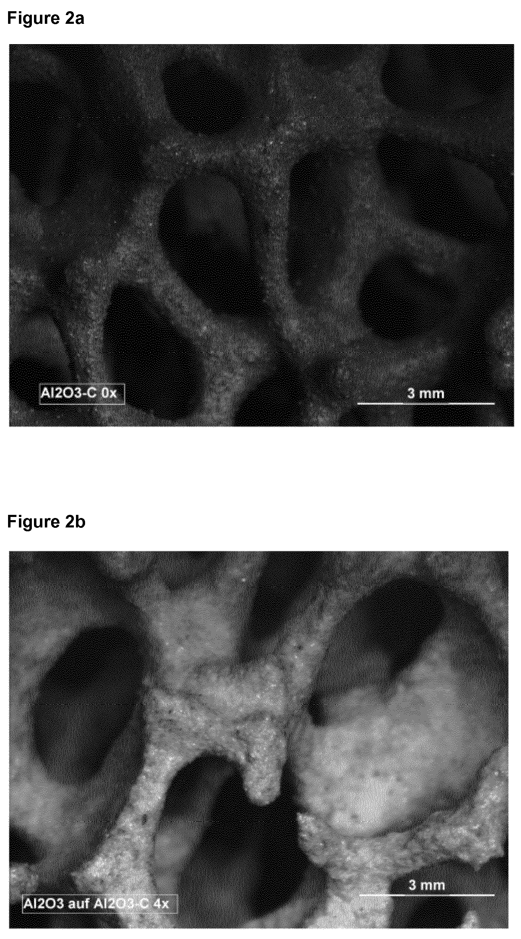

A C-Al₂O₃ carbon-bonded filter (of dimensions 50 x 50 x 20 mm) was used as the substrate. This is a reticulated foam filter formed from alumina and graphite refractories, using a pitch to give the carbon bonding on firing. As shown in Figure 2a, no cracks were visible in the filter substrate.

### Rod production

A rod of precursor coating material was prepared from the following raw materials:
- Alumina with d₅₀ = 0.8 μm (CT3000 SG, Almatis GmbH, Frankfurt, Germany): 82.0 wt%
- Thermoplastic injection moulding binder (Siliplast HO, Zschimmer & Schwartz, Koblenz, Germany): 18.0 wt%

The alumina used (CT3000SG) is a batch ground alumina having a mono-modal distribution, a Ground Median Size of 0.4 μm, a Ground Surface Area of 7.5 m²/g, and a NaO content of 0.08%.

Rods were prepared according to the following procedure:
1. Mixing the alumina with the injection moulding binder;
2. Extruding the mixture in a heatable twin screw extruder (Brabender OHG, Duisburg, Germany) into a rod-shape;
3. Partial de-binding of the rod in water (70 °C);
4. Sintering at 1450 °C for 1 hour.

The final dimensions of the rods were -600 mm in length; 6-6.2 mm diameter.

### Flame spraying parameters

Flame spraying was carried out using a Master Jet flame spraying gun (ROKIDE Spray Unit, Saint-Gobain, Avignon, France). In order to identify the optimal spraying parameters, the flame spraying gum was directed towards a metal sheet. The flow of acetylene gas was set to the highest possible value and the flow of oxygen gas was set to a value of 10-15% below that of the acetylene. With this adjustment it is possible to achieve the highest combustion temperature. After setting the flow of gas the rod feed rate was determined. The last step was the adjustment of the gun to substrate distance. If the distance is too small then the coating and the substrate will be affected by the pressured air. The parameters used for flame spraying are shown in Table 1:

**Table 1**

| | |
|---|---|
| Flow rate of oxygen gas (m³/hour) | 2.0 |
| 02 pressure (bar) | 5.5 |
| High of 02 - ball (mm) | 50 |
| Flow rate of acetylene gas (m³/hour) | 0.9 |
| Acetylene pressure (bar) | 1.1 |
| High of acetylene - ball (mm) | 60 |
| Flow rate of air (m³/hour) | 38.0 |
| Air pressure (bar) | 5.5 |
| Gun-to-substrate distance (mm) | 100 |
| Rod feed rate (mm/min) | 50 |

The coating was applied to each face of the filter for about 50-90 s, depending on the coating thickness.

### Results

Using the parameters described above, a coating thickness of approximately 50 μm was achieved.

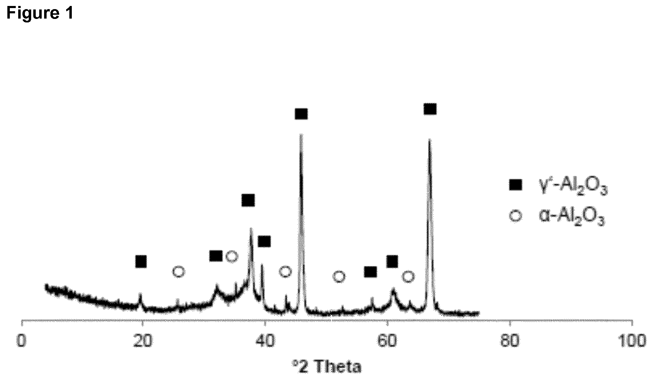

XRD analysis of the coated filter was carried out. As shown in Figure 1, the coating contained more than 90% gamma alumina. The alpha alumina present in the precursor coating material was therefore successfully converted to the gamma phase by the flame spraying process, and retained in the final coating material.

The coated filter was examined by light microscopy. As shown in Figure 2b, the coated filter has a dense structure.

EDX (Energy-Dispersive X-ray spectroscopy) spot analysis revealed that there is no interaction between the alumina coating and the alumina of the filter substrate at the coating-filter interface.

The coated filter was determined to have an open porosity of 7 vol%, as measured by mercury intrusion porosity. The porosity of prior art filters coated using ambient-temperature techniques is at least 20 vol%. Despite the high temperature of the flame, no deleterious effects on the structure of the carbon bonded filter were detected.

## Claims

1. A method of producing a coated filter for filtering molten metal, the method comprising thermally spraying a precursor coating material comprising alpha alumina, at a temperature which is sufficiency high to at least partially convert the alpha alumina to gamma alumina, to a carbon-bonded reticulated filter, so as to produce a carbon-bonded filter having a coating comprising gamma alumina.

2. The method of claim 1, wherein the thermal spraying is flame spraying, and is carried out using a flame spraying gun.

3. The method of claim 1 or claim 2, wherein the method does not include a step of sintering the coated filter.

4. The method of any one of claims 1 to 3, wherein the precursor coating material comprises at least 70 wt% alpha alumina.

5. The method of any one of claims 2 to 4, wherein the precursor coating material is in the form of a powder, wire, rod or cord.

6. The method of claim 5, wherein the precursor coating material is in the form of a rod and the method further comprises forming the rod of precursor coating material by:
mixing together alpha-alumina, a binder and optionally one or more additives to form a mixture;
extruding the mixture into the shape of a rod;
partially de-binding the extruded mixture; and
sintering the partially de-binded extruded mixture to provide a rod of precursor coating material.

7. The method of any preceding claim, wherein the precursor coating material has a melting temperature of at least 2000 °C.

8. The method of any one of claims 2 to 7, wherein flame spraying is carried out using oxygen and acetylene as combustible gases.

9. The method of claim 8, wherein the flow rate of the oxygen gas is from 0.8 to 4.0 m³/hour and/or the oxygen pressure is from 4.0 to 8.0 bar.

10. The method of claim 8 or claim 9, wherein the flow rate of the acetylene gas is from 0.3 to 1.0 m³/hour and/or the acetylene pressure is from 0.8 to 2.0 bar.

11. The method of any one of claims 6 to 10, wherein the rod of precursor coating material is fed through the flame spraying gun at a feed rate of from 40 to 100 mm/min and/or the distance between a nozzle of the flame spraying gun and the carbon bonded reticulated filter is from 80 to 150 mm.

12. A carbon-bonded filter having a coating comprising gamma alumina.

13. The filter of claim 12, wherein the proportion of gamma-alumina is at least 50% of the alumina content of the coating.

14. The filter of claim 12 or claim 13, wherein the coating has a thickness of from 50 to 200 μm and optionally wherein the coating is applied substantially throughout the entire thickness of the filter.

15. The filter of any one of claims 12 to 14, wherein the open porosity of the coated filter is no greater than 15 vol%.
